# EUROPÄISCHE PATENTSCHRIFT

(11) **EP 3 023 307 B1**
(45) Veröffentlichungstag und Bekanntmachung des Hinweises auf die Patenterteilung: **25.10.2017**
(21) Anmeldenummer: 15466014.6
(22) Anmeldetag: 13.11.2015
(51) Int. Cl.: B60R 21/206, B60R 21/231, B60R 21/235

(54) **KNIEAIRBAG**
KNEE AIRBAG
AIRBAG DE GENOU

(30) Priorität: 18.11.2014 CZ 20140797
(43) Veröffentlichungstag der Anmeldung: 25.05.2016
(73) Patentinhaber: Skoda Auto A.S., 293 60 Mladá Boleslav (CZ)
(72) Erfinder: Sturala, Richard, CZ-27751 Lesany (CZ)

(56) Entgegenhaltungen:
- WO-A1-2014/163337
- WO-A1-2015/173116
- DE-A1- 10 355 487
- DE-A1-102007 000 615
- DE-U1-202004 014 653

## Beschreibung

### Technisches Gebiet

Der Knieairbag des Fahrzeuges, der im deaktivierten Zustand im unteren Bereich der Instrumententafel angeordnet ist, umfasst einen aus drei Teilen gebildeten Sack und weist zwei Nähte für eine bessere Führung des Sacks bei seinem Entfalten nach oben entlang der Instrumententafel auf.

### Bisheriger Stand der Technik

Die Knieairbags helfen die wichtigen Körperteile zu schützen, insbesondere dann die unteren Gliedmaßen des Fahrers und Beifahrers.

Der Knieairbag ist ein Element der passiven Sicherheit, das nach dem Prinzip eines klassischen Airbags funktioniert. Er ist im unteren Bereich der Instrumententafel angeordnet. Bei einer Frontalkollision verhindert der Knieairbag den Kontakt der unteren Extremitäten mit den Teilen der Instrumententafel (Zündschlüssel, Lenksäule, usw.).

Der Knieairbag besteht aus einem Gewebesack, Gasgenerator und Steuergerät und ist im zusammengefalteten Zustand im unteren Bereich der Instrumententafel des Fahrzeuges angeordnet.

Der Sack des Knieairbags ist aus einem oder zwei Gewebestücken zusammengenäht, wobei einer der beiden Seiten des Sacks im Bereich der unteren Kante der Instrumententafel verkürzt ist, um die Entfaltung des Luftsacks nach oben entlang der Instrumententafel bei seiner Aktivierung zu erleichtern. Oft sind beide Sackseiten des Airbags gleich groß.

Der Nachteil des bisherigen Standes der Technik liegt in der Tatsache, dass sich der Sack des Knieairbags tendenziell in der Richtung X entfaltet, also in der Richtung der Fahrzeuglängsachse zwischen die Füße des Fahrers oder Beifahrers.

Aus dem Stand der Technik ist weiter das Dokument DE 103 55 487 A1 bekannt. Es beschreibt einen Gassack für ein Fahrzeuginsassen-Rückhaltesystem, der ein erstes und ein zweites Seitenteil sowie ein Frontteil aufweist, die miteinander durch zweidimensionale Nähte verbunden sind. Nachteil dieser Lösung ist, dass sie nicht ermöglicht, dass eine Seite des Gassacks zur unteren und vorderen Wand der Instrumententafel akkurat anliegt. Die Erfindung betrifft insbesondere einen Beifahrer-Gassack, insbesondere für ein Gassack-Modul, das in der Nähe der Windschutzscheibe des Fahrzeugs angeordnet ist.

### Darstellung der Erfindung

Die Aufgabe der Erfindung, den oben genannten Nachteil des bisherigen Standes der Technik zu beseitigen, wird durch die vorliegende erfindungsgemäße technische Lösung gelöst.

Der Sack des erfindungsgemäßen Knieairbags wird durch drei Teile gebildet und weist zwei Nähte auf, wobei zwei mit der Naht verbundene Sackteile die Seite A bilden und ein Sackteil die Seite B bildet. Die Seite A und die Seite B des Sacks sind randumlaufend zueinander genäht.

In dem aktivierten Zustand des Airbags, also beim entfalteten Sack, hat dieser Sack ein L-förmiges Profil und die Seite A liegt zur unteren und vorderen Wand der Instrumententafel an, während die Seite B ins Fahrzeuginnere ausgerichtet ist.

Eine Naht ist am Sack so angeordnet, dass im aktivierten Zustand des Airbags, also beim entfalteten Sack, diese Naht zu der Unterkante der Instrumententafel anliegt, wobei sie die zwei Sackteile der Seite A des Knieairbags verbindet. Diese Naht wird gebildet durch die Verbindung des unteren Randes des Sackoberteils und des oberen Randes des Sackunterteils.

Die zweite Naht ist so ausgebildet, dass in dem aktivierten Zustand des Knieairbags, also beim entfalteten Sack, diese Naht in dem Sackoberteil angeordnet ist, wobei sie den einen oberen Teil der Seite A und den einen Teil der Seite B verbindet.

Der Sack hat im aktivierten Zustand des Knieairbags bei der Frontansicht der Seite A sowie B eine pilzartige Gestalt, deren unterer Fußteil niedriger als der obere Teil ist.

### Übersicht der Figuren der Zeichnungen

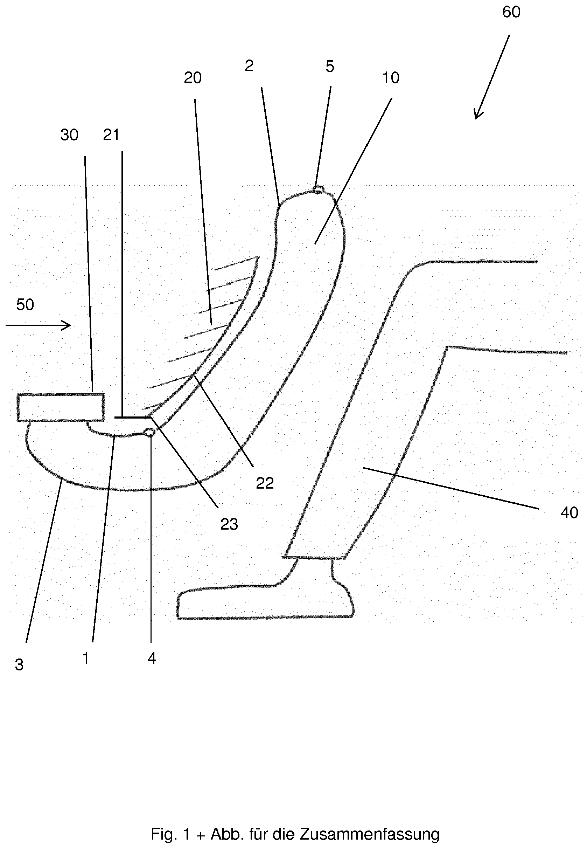

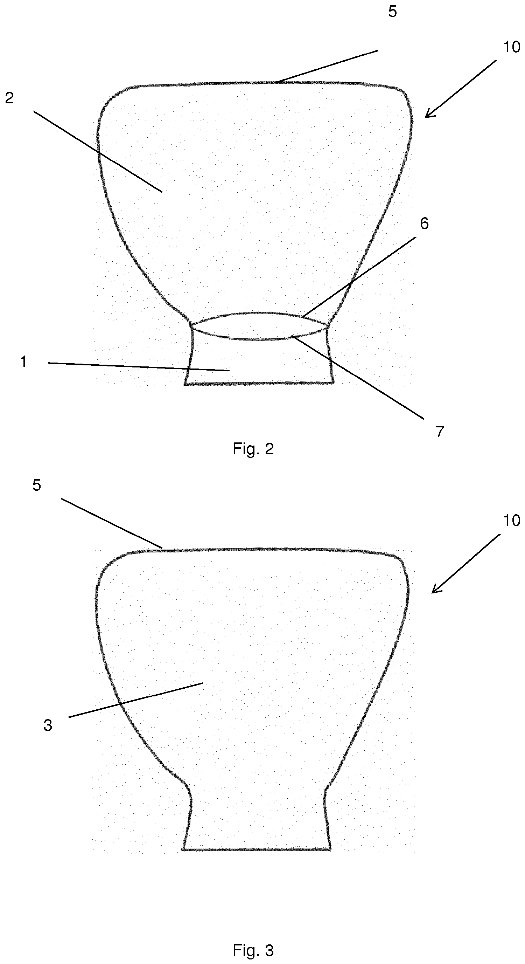

Die Fig. 1 zeigt eine Seitenansicht der Fahrzeuginstrumententafel und des Sacks des Knieairbags des Fahrzeuges im aktivierten Zustand, die Fig. 2 zeigt die Seite A des Sacks des Knieairbags vor der Bildung der Naht zwischen beiden Teilen des Sacks und die Fig. 3 die Ansicht der Seite B des Sacks des Knieairbags.

### Ausführungsbeispiel der Erfindung

Die Fig. 1 zeigt die Seitenansicht der Fahrzeuginstrumententafel 20 und des Sacks 10 des Knieairbags des Fahrzeuges im aktivierten Zustand, in dem der Knieairbag den Kontakt des Fußes des Fahrers oder Beifahrers 40 mit den Teilen der Instrumententafel 20 verhindert. Der Knieairbag kann sowohl auf der Fahrerseite, wie auch an der Beifahrerseite angeordnet werden.

Der Knieairbag besteht aus einem Gewebesack, Gasgenerator und Steuergerät und ist im zusammengefalteten Zustand im unteren Bereich der Instrumententafel des Fahrzeuges angeordnet. Er kann in einem Airbaggehäuse 30 untergebracht werden.

Der Sack 10 des Knieairbags nach vorliegender Erfindung wird gebildet durch drei Teile 1, 2, 3 und weist zwei Nähte 4, 5 auf, wobei zwei mit der Naht 4 verbundenen Sackteile 1, 2 die Seite A bilden und ein Teil 3 des Sacks 10 die Seite B bildet. Seite A und Seite B des Sacks 10 sind randumlaufend zueinander genäht.

In dem aktivierten Zustand des Airbags, also beim entfalteten Sack 10, hat dieser Sack 10 ein L-förmiges Profil und die Seite A liegt zur unteren 21 und vorderen 22 Wand der Instrumententafel 20 an, während die Seite B ins Fahrzeuginnere 60 ausgerichtet ist.

Eine Naht 4 ist am Sack so angeordnet, dass im aktivierten Zustand des Airbags, also beim entfalteten Sack 10, diese Naht 4 zu der Unterkante 23 der Instrumententafel 20 anliegt, wobei sie die zwei Sackteile 1, 2 der Seite A des Knieairbags 10 verbindet. Diese Naht 4 wird gebildet durch die Verbindung des unteren Randes 6 des Sackoberteils 2 und des oberen Randes 7 des Sackunterteils 1.

Die zweite Naht 5 ist so ausgebildet, dass in dem aktivierten Zustand des Knieairbags, also beim entfalteten Sack 10, diese Naht in dem Sackoberteil 10 angeordnet ist, wobei sie den einen oberen Teil 2 der Seite A und den einen Teil 3 der Seite B verbindet.

Die Fig. 2 zeigt die Seite A des Sacks 10 des Knieairbags vor der Bildung der Naht zwischen beiden Teilen 1, 2 des Sacks und die Fig. 3 die Ansicht der Seite B des Sacks 10 des Knieairbags.

Aus Fig. 2 und 3 ist zu entnehmen, dass die Form und Fläche der Teile 1 und 2 der Seite A im Wesentlichen gleich mit dem Teil 3 der Seite B sind. Vor der Bildung der Naht 4 an der Seite A ist zwischen den beiden Teilen 1 und 2 eine ellipsen- bzw. linsenförmige Öffnung. Bei der Aktivierung des Luftsacks 10 des Knieairbags entsteht dadurch ein Gelenk im Bereich der unteren Kante 23 der Instrumententafel 20. Die Länge der unteren Kante 21 der Instrumententafel 20 entspricht der Länge des ersten Teils 1 der Seite A des Sacks 10.

Der Sack hat im aktivierten Zustand des Knieairbags bei der Frontansicht der Seite A sowie B eine pilzartige Gestalt, deren unterer Fußteil niedriger als der obere Teil ist.

### Gewerbliche Anwendbarkeit

Der Knieairbag kann in Personenkraftfahrzeugen eingesetzt werden.

### Bezugszeichenliste

1 - erste (untere) Teil des Sacks des Knieairbags
2 - zweite (obere) Teil des Sacks des Knieairbags
3 - dritte Teil des Sacks des Knieairbags
4, 5 - Nähte
6 - unterer Rand des zweiten Teils
7 - oberer Rand des ersten Teils
10 - Sack des Knieairbags
20 - Instrumententafel
21 - untere Wand der Instrumententafel
22 - Vorderwand der Instrumententafel
23 - untere Kante der Instrumententafel
30 - Airbaggehäuse
40 - Fahrer- oder Beifahrerfuß
50 - Richtung X
60 - Fahrzeuginterieur

## Patentansprüche

1. Knieairbag bestehend aus einem Gewebesack (10), Gasgenerator und Steuereinheit, der im zusammengefalteten Zustand unter der Instrumententafel (20) des Fahrzeuges angeordnet ist, **dadurch gekennzeichnet, dass** der Sack (10) durch drei Teile - den ersten unteren Teil (1) des Sacks (10) des Knieairbags, den zweiten oberen Teil (2) des Sacks (10) des Knieairbags und den dritten Teil (3) des Sacks (10) des Knieairbags - gebildet wird und zwei Nähte (4, 5) aufweist, wobei die Teile (1) und (2) des Sacks (10) eine Seite (A) bilden und der Teil (3) des Sacks (10) eine andere Seite (B) bildet.

2. Knieairbag nach Anspruch 1 **dadurch gekennzeichnet, dass** in dem aktivierten Zustand des Airbags, also beim entfalteten Sack (10), dieser Sack (10) ein L-förmiges Profil hat und mit der Seite A an die untere (21) und vordere (22) Wand der Instrumententafel (20) anliegt, während die Seite B im Fahrzeuginnere (60) angeordnet ist.

3. Knieairbag nach vorgenannten Ansprüchen **dadurch gekennzeichnet, dass** die erste Naht (4) an dem Sack (10) im aktivierten Zustand des Airbags, also beim entfalteten Sack (10), zu der Unterkante (23) der Instrumententafel (20) anliegt, wobei sie die Teile (1) und (2) verbindet.

4. Knieairbag nach vorgenannten Ansprüchen **dadurch gekennzeichnet, dass** die erste Naht (4) durch die Verbindung des unteren Randes (6) des Oberteils (2) und des oberen Randes (7) des Unterteils (1) des Sacks (10) gebildet wird.

5. Knieairbag nach vorgenannten Ansprüchen **dadurch gekennzeichnet, dass** die zweite Naht (5) so gebildet wird, dass im aktivierten Zustand des Knieairbags, also beim entfalteten Sack (10), sie in dem oberen Sackteil (10) angeordnet ist und die Teile (2) und (3) verbindet.

6. Knieairbag nach vorgenannten Ansprüchen **dadurch gekennzeichnet, dass** der Sack (10) im aktivierten Zustand des Knieairbags bei einer Frontansicht der Seite A sowie B eine pilzartige Gestalt aufweist, deren unterer Fußteil niedriger als der obere Teil ist.

7. Knieairbag nach vorgenannten Ansprüchen **dadurch gekennzeichnet, dass** die Seite A und Seite B des Sacks (10) randumlaufend mit Nähten verbunden sind.

## Claims

1. A knee air bag consisting of a woven fabric bag (10), a gas generator and control unit, which is arranged in the folded state under the instrument panel (20) of the vehicle, **characterized in that** the bag (10) is formed by three parts - the first lower part (1) of the bag (10) of the knee air bag, the second upper part (2) of the bag (10) of the knee air bag and the third part (3) of the bag (10) of the knee air bag - and has two seams (4, 5), wherein the parts (1) and (2) of the bag (10) form one side (A) and the part (3) of the bag (10) forms another side (B).

2. A knee air bag according to Claim 1, **characterized in that** in the activated state of the air bag, therefore, when the bag (10) is unfolded, this bag (10) has an L-shaped profile and abuts with the side A against the lower (21) and front (22) wall of the instrument panel (20), while the side B is arranged in the inside of the vehicle (60).

3. A knee air bag according to the aforementioned claims, **characterized in that** the first seam (4) on the bag (10) in the activated state of the air bag, therefore, when the bag (10) is unfolded, abuts the lower edge (23) of the instrument panel (20), wherein it connects the parts (1) and (2).

4. A knee air bag according to the aforementioned claims, **characterized in that** the first seam (4) is formed by the connection of the lower edge (6) of the upper part (2) and the upper edge (7) of the lower part (1) of the bag (10).

5. A knee air bag according to the aforementioned claims, **characterized in that** the second seam (5) is formed such that in the activated state of the knee air bag, therefore, when the bag (10) is unfolded, it is arranged in the upper bag part (10) and connects the parts (2) and (3).

6. A knee air bag according to the aforementioned claims, **characterized in that** the bag (10) in the activated state of the knee air bag in a front view of side A as well as B has a mushroom-like shape, the lower base part of which is lower than the upper part.

7. A knee air bag according to the aforementioned claims, **characterized in that** the side A and side B of the bag (10) are connected to the seams around the edges.

## Revendications

1. Airbag de genoux, constitué d'un sac en tissu (10), d'un générateur de gaz et d'une unité de commande, qui est, dans l'état replié, disposé sous le tableau de bord (20) du véhicule, **caractérisé en ce que** le sac (10) est formé de trois parties - la première partie inférieure (1) du sac (10) de l'airbag de genoux, la deuxième partie supérieure (2) du sac (10) de l'airbag de genoux et la troisième partie (3) du sac (10) de l'airbag de genoux, et présente deux coutures (4, 5), les parties (1) et (2) du sac (10) formant un côté (A), et la partie (3) du sac (10) formant un autre côté (B).

2. Airbag de genoux selon la revendication 1, **caractérisé en ce que,** dans l'état activé de l'airbag, c'est-à-dire quand le sac (10) est déplié, ce sac (10) a un profil en forme de L et est, par le côté A, plaqué sur la paroi inférieure (21) et avant (22) du tableau de bord (20) tandis que le côté B est disposé dans l'intérieur du véhicule (60).

3. Airbag de genoux selon les revendications précitées, **caractérisé en ce que** la première couture (4) est plaquée sur le sac (10) dans l'état activé de l'airbag, c'est-à-dire quand le sac (10) est déplié, vers l'arête inférieure (23)du tableau de bord (20), et raccorde ainsi les pièces (1) et (2).

4. Airbag de genoux selon les revendications précitées, **caractérisé en ce que** la première couture (4) est formée par le raccordement du bord inférieur (6) de la partie supérieure (2) et du bord supérieur (7) de la partie inférieure (1) du sac (10).

5. Airbag de genoux selon les revendications précitées, **caractérisé en ce que** la deuxième couture (5) est formée de telle sorte que, dans l'état activé de l'airbag, c'est-à-dire quand le sac (10) est déplié, elle est disposée dans la partie de sac (10) supérieure et raccorde les parties (2) et (3).

6. Airbag de genoux selon les revendications précitées, **caractérisé en ce que** le sac (10), dans l'état activé de l'airbag de genoux, présente, dans une vue frontale des côtés A ainsi que B, une forme du type champignon dont la partie de pied inférieure est plus basse que la partie supérieure.

7. Airbag de genoux selon les revendications précitées, **caractérisé en ce que** les côtés A et B du sac (10) sont raccordés par des coutures sur la périphérie de bord.
